# EUROPÄISCHE PATENTSCHRIFT

(11) **EP 0 831 042 B1**
(45) Veröffentlichungstag und Bekanntmachung des Hinweises auf die Patenterteilung: **07.04.1999**
(21) Anmeldenummer: 97114274.0
(22) Anmeldetag: 19.08.1997
(51) Int. Cl.: B65G 47/88

(54) **Vorrichtung zur Vereinzelung und Zuteilung von Werkstücken**
Device for the separation and distribution of work-pieces
Dispositif pou séparer et répartir des pièces à manipuler

(30) Priorität: 19.09.1996 DE 19638489
(43) Veröffentlichungstag der Anmeldung: 25.03.1998
(73) Patentinhaber: Ludwig, Walter, 76534 Baden-Baden (DE)
(72) Erfinder: Ludwig, Walter, 76534 Baden-Baden (DE)
(74) Vertreter: Hellmayr, Wolfgang, Dr. rer. nat.

(56) Entgegenhaltungen:
- US-A- 2 679 919
- US-A- 3 608 695
- US-A- 3 923 142
- US-A- 4 330 055

## Beschreibung

Die Erfindung betrifft eine Vorrichtung zur Vereinzelung und Zuteilung von Werkstücken, insbesondere von Holzwerstücken wie Brettern. Insbesondere betrifft die vorliegende Erfindung eine Vorrichtung zur taktweisen Vereinzelung und Zuteilung oder Zuführung von Werkstücken gleicher oder wechselnder Breite zu nachgeschalteten Förderanlagen und/oder Bearbeitungsmaschinen.

Derartige Vorrichtungen, bei denen z. B. über eine Schrägrutsche, abfallende Rollhahn oder dergl . ankommende Bretter durch einen Anschlag angehalten werden, um sodann durch Nocken, Kurvenscheiben oder ähnliche Mittel über den Anschlag angehoben und somit weitertransportiert zu werden, sind bekannt.

Aus der deutschen Patenschrift 2 320 033 ist eine Vorrichtung zur Vereinzelung und Zuteilung von Holzwerkstücken, insbesondere von Brettern, bekannt, bei der die Nocken (Profilierungen) derart von der Kreisscheibe abheben, daß der eine Anstieg etwa tangential bis zur Gesamthöhe der Nocken und der andere Anstieg etwa in Richtung der Normalen zur Kreisscheibe verläuft. Durch den tangentialen Anstieg des Nockens wird auch ein in sich gekrümmtes Holzwerkstück sofort angehoben und über den Anschlag hinweggefördert. Durch den schrägen Abfall der Außenseite des Nockens, der etwa dem äußeren Umfangskreis entspricht, rutscht das nächste Holzwerkstück an dieser Abschrägung ab, und es wird so verhindert, daß auch dieses gleichzeitig mitangehoben wird.

Der Weitertransport erfolgt durch die Schwerkraft, durch den Druck der nachrutschenden Bretter und/oder durch eine Fördereinrichtung.

Diese Vorrichtungen haben durch das auf der Schwerkraft der Bretter beruhende Abrollen oder Rutschen infolge des Beharrungsvermögens der Bretter den Nachteil der unkontrollierten Zuteilgeschwindigkeit, was sich besonders bei schmalen Brettern nachteilig auswirkt.

Weiter bekannt sind Einrichtungen, die Bretter über Ketten-oder Riemenförderer oder dergl . bis zu einem Anschlag transportieren, wobei durch Absenken des Anschlages oder Anheben des Förderers die Bretter vereinzelt werden.

Diese Vorrichtungen haben den Nachteil, daß bei wechselnder Brettbreite auf die neue Breite eingestellt werden muß, weshalb unterschiedliche Brettbreiten nicht gleichzeitig beschickt werden können, bzw. hohe Taktzahlen nicht möglich sind.

Bei einer anderen Vorrichtung (US-Patent 3.031.061) werden die auf einem Förderer ankommenden Bretter durch einen Anschlag gestoppt und durch eine Kurvenscheibe allmählich angehoben. Dieses allmähliche Anheben der Bretter kann zu Störungen führen, weil in ihrer Längsachse verdrehte oder leicht gekrümmte Bretter nicht zeitgleich den Anschlag passieren, jedoch sofort nach Passieren des Anschlages weitergefördert werden und dadurch schräg auf dem nachgeschalteten Förderer zu liegen kommen. Als weiterer Nachteil ist der Umstand anzusehen, daß das zuzuteilende Brett nicht angetrieben wird und von den nachfolgenden Brettern geschoben werden muß. Außerdem entsteht durch das allmähliche Anheben ein Zeitverlust, was hohe Taktzahlen nicht zuläßt. Der Weitertransport nach dem Anheben ist abhängig von der Geschwindigkeit des vor- bwz. nachgeschalteten Förderers.

In der Druckschrift US 4 330 055 ist eine Fördervorrichtung beschrieben, mit der jeweils ein Brett mittels Klemmvorrichtungen von oben und unten gefaßt und vom Förderband hoch- und über einen Anschlag hinweggehoben und auf einer Zuteilvorrichtung abgelegt werden kann. Die angewandte Technik ist sehr aufwendig und beansprucht eine erhebliche Baulänge. Das Absenken und Auftauchen des Anschlags 23 ist abhängig vom Takt und nicht von der Werkstückbreite. Die Vorrichtung ist ungeeignet für die Separierung und Zuteilung von Brettern, die sich in der Breite wesentlich unterscheiden. Sie erlaubt nicht ohne zusätzlichen Aufwand die exakte Positionierung der Werkstücke für die direkt sich anschließende Bearbeitungsstufe.

Aus der Druckschrift US 3 608 695 geht eine Kombination von praktisch drei Förderern hervor, und zwar einem ersten abwärts geneigten, einem mittleren und einem dritten schnellen Förderer. Dieser Lösungsvorschlag verlangt zusätzlichen technischen Aufwand zum Anheben und Absenken der Transportbänder. Bei unterschiedlichen Bretterbreiten treten besondere Probleme auf. Diese bekannte Vorrichtung erlaubt keine exakte Positionierung der Werkstücke für die direkt sich anschließende Bearbeitungsstufe.

Bei der Vorrichtung gemäß der Lehre der Druckschrift US 2 679 919, der ein ähnliches Funktionsprinzip zugrunde liegt wie der vorstehend diskutierten, werden die Werkstücke, die dem vereinzelten Werkstück nachfolgen, jedoch nicht durch Abheben von der Fördereinrichtung, sondern durch einen Anschlag zurückgehalten. Auch hier ist nachteilig, daß keine exakte Positionierung der Werkstücke möglich ist und daß der technische Aufwand sehr erheblich ist. Bei unterschiedlichen Werkstückbreiten muß der Abstand der Anhaltevorrichtung neu eingestellt werden. Zusätzlich ist festzustellen, daß insbesondere bei nassen und vereisten Werkstücken der Weitertransport gestört sein kann, weil der Kraftschluß nur durch Adhäsion auf Grund des Eigengewichts erfolgt. So gelangen die Bretter beispielsweise in Schräglage.

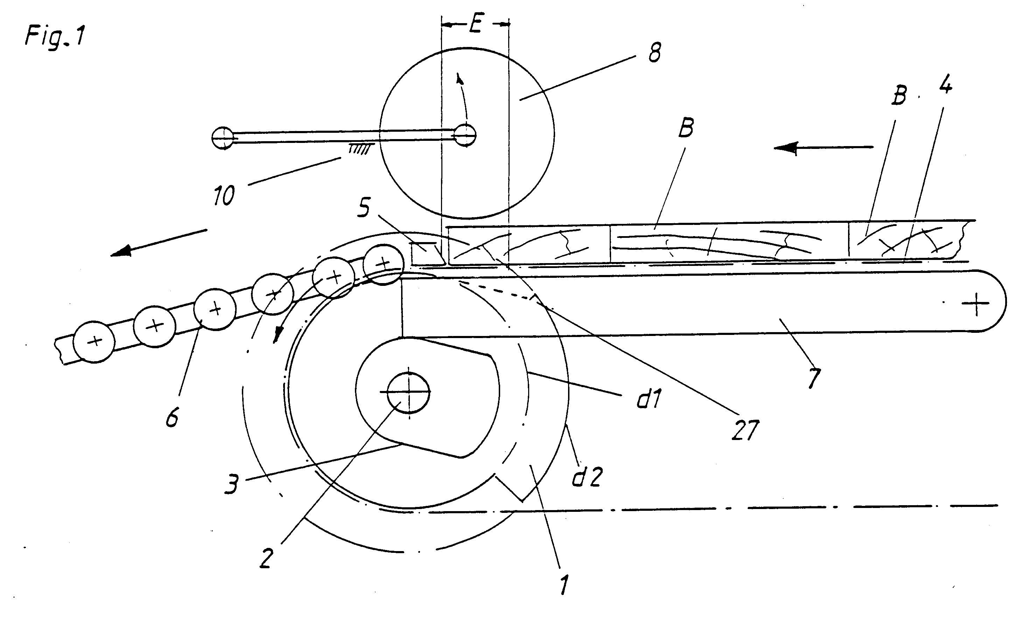

Die in der Druckschrift US 3 923 142 offenbarte Vorrichtung weist Stützarme und Preßkörper auf, die dazu dienen, Bretter von einem ersten Förderband in synchronisierter Bewegung auf ein zweites zu befördern. Diese Preßkörper wirken als Gegendruckeinrichtung, indem sie sich am Dosierungspunkt auf das Werkstück absenken und es während des Förderns einklemmen. Bei unterschiedlicher Höhe der Werkstücke kann nach einem dünnen, schmalen Werkstück das nachfolgende dickere Werkstück durch die Kreisbewegung der Gegendruckeinrichtung bereits dessen Vorderkante berühren, bevor der Stempel der Gegendruckeinrichtung das am Anschlag liegende niedrigere Werkstük trifft. Diese Störmöglichkeit ist bereits aus den Abbildungen, z. B. Figur 1, ersichtlich. Der Antrieb der Gegendruckeinrichtung hat im Takt zu erfolgen.

Das erforderliche Bauvolumen der Gegendruckeinrichtung ist sehr erheblich. Eine exakte Positionierung der Werkstücke für die direkt sich anschließende Bearbeitung ist ohne zusätzlichen mechanischen Aufwand nicht möglich.

Die Aufgabe, die der Erfindung zugrunde liegt, ist die Bereitstellung einer Vorrichtung, mit der es möglich ist, verschiedenartige Werkstücke, z. B. auch gekrümmte Bretter oder Werkstücke wechselnder Breite, in kontrollierter Weise auch bei hoher Taktzahl und, ohne die Apparatur umrüsten zu müssen, zu vereinzeln und weiteren Arbeitsgängen zuzuteilen.

Gegenstand der Erfindung ist nun eine Vorrichtung zur Vereinzelung und Zuteilung von Werkstücken, insbesondere von Holzwerkstücken, die mindestens eine Fördereinrichtung (4), mindestens einen Anschlag (5), der die geförderten Werkstücke anhält, und mindestens eine unterhalb der Fördereinrichtung angeordnete Hebevorrichtung, welche a) als segmentierte Zuteilscheibe (1) oder b) als angetriebene Hubrolle (14) ausgebildet ist und das erste Werkstück über den Anschlag (5) hinausheben kann, aufweist, welche Vorrichtung dadurch gekennzeichnet ist, daß die Umfangsoberfläche des/der Segmente /-s der Zuteilscheibe bzw. der Hubrolle griffig ausgebildet sind und außerdem die Vorrichtung eine Rückhaltevorrichtung aufweist, welche die dem angehobenen Werkstück nachfolgenden Werkstücke anhebt und dadurch zurückhält und erst wieder freigibt, nachdem das voranlaufende Werkstück über den Anschlag hinweggehoben und weitettransportiert worden ist, so daß die Werkstücke nicht nur über den Anschlag hinweggehoben, sondern auch mit kontrollierter Geschwindigkeit weitertransportiert werden.

Das Weitertransportieren erfolgt gleichzeitig mit dem Hochheben und mit kontrollierter Geschwindigkeit, und die Weitertransportgeschwindigkeit ist vorzugsweise größer als die Fördergeschwindigkeit.

Als Rückhaltevorrichtung kann eine Bremsleiste (7) dienen, die, während das Zuteilsegment (d2) bzw. die Hubrolle (14) sich im Eingriffsbereich (E) befinden, über die Auflagekante der Fördereinrichtung hinaus gehoben wird, die nachfolgenden Werkstücke dadurch anhebt und somit stoppt.

Als Rückhaltevorrichtung kann aber auch z. B. ein schwenkbarer Anschlag (15) dienen, der beim Hochheben des Werkstückes der Werkstückunterseite folgt, nach Passieren des Werkstückes seine obere Position erreicht und die nachfolgenden Werkstücke stoppt und, nachdem das Zuteilscheibensegment (d2) bzw. die Hubrolle (14) den Eingriffsbereich (E) verlassen hat, in die untere Position zurückkehrt.

Der Antrieb der Bremsleiste und/oder der Hubeinrichtung kann über Exzenter, Kurvenscheiben, Kurbeltrieb, die mit der Zuteilscheibe gekoppelt sein können, oder Linearantrieb erfolgen.

Das Anheben der Bremsleiste bzw. des schwenkbaren Anschlages kann kurz vor, während oder nach Eintritt des Zuteilscheibensegmentes in den Eingriffsbereich erfolgen.

Mit der erfindungsgemäßen Vorrichtung werden die durch den Anschlag angehaltenen Werkstücke, wobei der Anschlag fest oder verstellbar sein kann, zur taktweisen oder willkürlichen Zuteilung und Vereinzelung über den Anschlag angehoben und weitergefördert und gegebenfalls auf einer weiteren Fördereinrichtung oder einem Tisch abgelegt. Dazu dienen eine Hebevorrichtung, die z. B. eine angetriebene Zuteilscheibe, eine lose Rolle oder eine Gleitkufe sein kann.

Die Zuteilscheibe weist mindestens ein Segment auf, wobei die Umfangslinie oder -fläche die Auflage auf der Fördereinrichtung vor oder nach dem Anschlag überragt.

Der Abstand zwischen dem Schnittpunkt des Zuteilsegmentes mit der Auflagekante des Förderers und der Vorderkante des Anschlages mit dem Förderer wird als Eingriffsbereich bezeichnet.

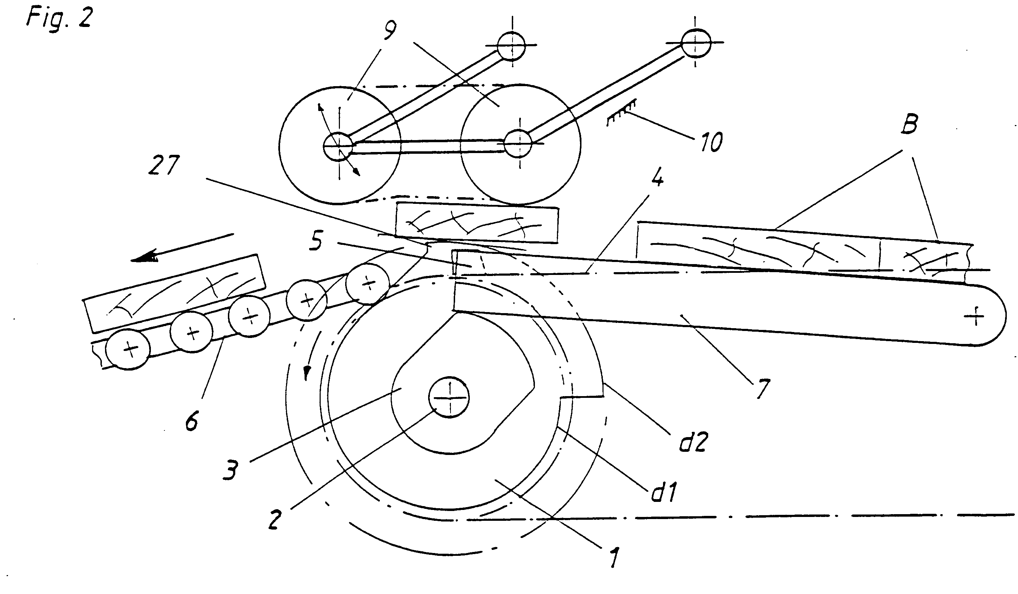

In der Praxis wird die Ausführung entsprechend Figur 1 oder 2 bevorzugt, wobei je nach Art (Breite, Gewicht) des Werkstückes entweder die Bremsleiste oder der schwenkbare Anschlag eingesetzt werden.

Die Umfangslinien des kleineren und des größeren Segmentes können auch eine Kurve beschreiben oder eine kantige bzw. zahnartige Form aufweisen.

Wenn als Hebevorrichung eine Hubrolle oder mehrere Hubrollen verwendet werden, können die Rollen frei laufen oder angetrieben sein.

Bei Verwendung von Maschinen mit kontinuierlicher Taktfolge, z. B. Durchlauf-Kappsägen, kann die Zuteilvorrichtung einschließlich der Fördereinrichtung direkt an die Vorschubeinrichtung gekoppelt werden.

Vorzugsweise weist die erfindungsgemäße Vorrichtung eine Gegendruckeinrichtung zum Festhalten des hochgehobenen Werkstückes auf der Hebevorrichtung auf

Vorzugsweise ist die Gegendruckeinrichtung oberhalb der Hebevorrichung und über der Fördereinrichtung, gegebenfalls nach oben und unten beweglich, angeordnet, wobei ihr Abstand zur Fördereinrichtung so einstellbar ist, daß das auf der Fördereinrichtung ankommende Werkstück ungehindert bis zum Anschlag gelangt und dann beim Angehobenwerden zwischen Hebevorrichtung und Gegendruckeinrichtung zur Erhöhung des Kraftschlusses eingeklemmt wird.

Die Gegendruckeinrichtung kann auch eine oder mehrere Rollen umfassen, die mit Riemen oder Ketten verbunden sein können und gegebenfalls angetrieben werden.

Vorzugsweise wird beispielsweise eine Vorrichtung nach Anspruch 2 und 5 verwendet, wobei die Bremsleiste beim Eintritt der segmentierten Zuteilscheibe in den Eingriffsbereich so weit angehoben wird, daß die auf der Fördereinrichung liegenden Werkstücke von dieser abgehoben und am Weitertransport gehindert werden und erst, nachdem das Segment den Eingriffsbereich passiert hat, wieder auf die Fördereinrichtung abgesenkt werden und bis zum Anschlag weiterlaufen.

Die Zuteilscheibe kann mehrere Segmente aufweisen, so daß während einer Umdrehung mehrere Werkstücke zugeteilt werden.

Gemäß einer weiteren Ausführungsform der Erfindung kann, insbesondere bei ungeordnet ankommenden Werkstücken, die Zuteilscheibe mehrere Segmente mit unterschiedlichen Durchmessern aufweisen, denen z. B. zwei Anschläge, und zwar ein unterer und ein oberer, zugeordnet sind, wodurch bei aufeinanderliegend ankommenden Werkstücken das untere Werkstück am unteren Anschlag und das obere Werkstück am oberen Anschlag angehalten wird, und bei Drehung der Zuteilscheibe zuerst das obere Werkstück und dann das untere Werkstück zugeteilt werden.

Anstelle von zwei Fördereinrichtungen kann auch eine durchgehende Fördereinrichtung verwendet werden.

Bei Koppelung der Fördereinrichtung mit der Hebevorrichtung können die auf der Fördereinrichtung nachrückenden Werkstücke an den ihrer Gesamtlänge entsprechenden Anschlägen überwacht und bei Nichtanliegen des ersten Werkstückes durch schwenkbare Anschläge angehalten werden, welche die nachfolgenden Werkstücke erst freigeben, wenn diese an den ihrer Länge zugeordnenten Anschlägen anliegen und das Zuteilsegment den Eingriffsbereich verlassen hat. Bei Einsatz des schwenkbaren Anschlages kann das nachfolgende Werkstück unmittelbar dem zuzuteilenden Werkstück folgen.

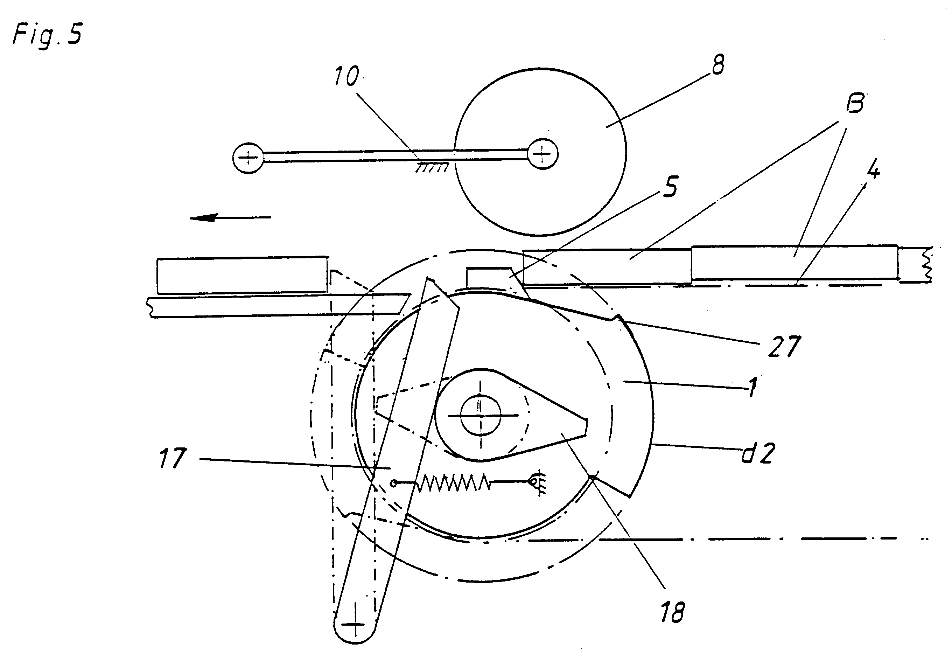

Zum exakten Positionieren der Werkstücke können diese nach Ablegen durch die Hebevorrichtung mittels eines Ausrichthebels zu ihrer Längsachse ausgerichtet werden (Figur 5).

Die Zuteil-und Vereinzelungsvorrichtung besteht in der bevorzugten Ausführung aus einem Förderer (4) (Abrollbahn, Ketten-oder Riemenförderer) (Figur 1), der die Bretter (B) bis zu einem Anschlag (5) transportiert, einer Hebevorrichtung (Zuteilscheibe (1), Hubeinrichtung (14) (Figur 4)), welche die Bretter abrupt über den Anschlag (5) abhebt, sowie einem Förderer (6) oder einer Ablage (22) (Figur 7), welcher/welche die Bretter nach dem Zuteilen übernimmt.

Da die Bretter durch die Zuteilscheibe (1) oder Oberdruck (8) oder (9) bzw. die Hubrolle in den Figuren 1, 2, 4, 5, 7 und 8 mit einer vorgegebenen Geschwindigkeit bewegt werden, die zweckmäßigerweise höher als die Geschwindigkeit des Förderers (4) gewählt wird, entsteht ein beabsichtigter Abstand zu den nachfolgenden Brettern und somit eine exakte Trennung.

Die Zuteilscheibe (1) (Figur 1) besteht aus mindestens einem zentrisch zur Welle (2) angeordneten Kreissegment (d2) (Zuteilsegment genannt), das den Förderer (4) und den Anschlag (5) überragt. Der Abstand zwischen dem Schnittpunkt der Oberkante des Förderers (4) mit der Kreislinie des Zuteilsegmentes (d2) und der Vorderkante des Anschlages (5) wird Eingriffsbereich (E) genannt. Die Form des unterhalb des Eingriffsbereiches (E) liegenden Teils der Zuteilscheibe ist beliebig, zweckmäßigerweise jedoch als Kreissegment (d1) ausgebildet, das mit seiner Tangente einen Schnittpunkt zum Zuteilsegment (d2) bildet. Dieser Schnittpunkt kann zum sicheren Kraftschluß als Zahn (27) ausgebildet sein. Die Umfangsoberfläche des Zuteilsegmentes kann mit Zähnen oder ähnlichem griffigem Material versehen sein.
Figur 1 zeigt das Funktionsprinzip der Vorrichtung in Grundstellung, wobei als Hebe-und Fördereinrichtung eine Zuteilscheibe Verwendung findet.
Figur 2 zeigt diesselbe Vorrichtung, jedoch mit anderem Oberdruck in Aktion. Durch Drehen der Zuteilscheibe in Pfeilrichtung wurde das erste Brett durch die Tangente bzw. die Bremsleiste bereits über den Anschlag (5) gehoben und wird durch die Umfangslinie des Zuteilsegmentes (d2) auf den Förderer (6) übergeben. Die nachfolgenden Bretter werden durch die Bremsleiste (7) angehoben und zurückgehalten, bis sich das Zuteilsegment (d2) außerhalb des Eingriffsbereiches (E) befindet. Nach Absenken der Bremsleiste werden die nachfolgenden Bretter wieder aufden Förderer (4) abgelegt und laufen bis zum Anschlag (5). Bei Koppelung der Zuteilscheibe mit dem Kettenrad des Förderers (4) erreicht das zugeteilte Brett, bedingt durch den größeren Durchmesser des Zuteilsegmentes gegenüber dem Teilkreis des Kettenrades, eine höhere Geschwindigkeit und damit einen Abstand zum nachfolgenden Brett.

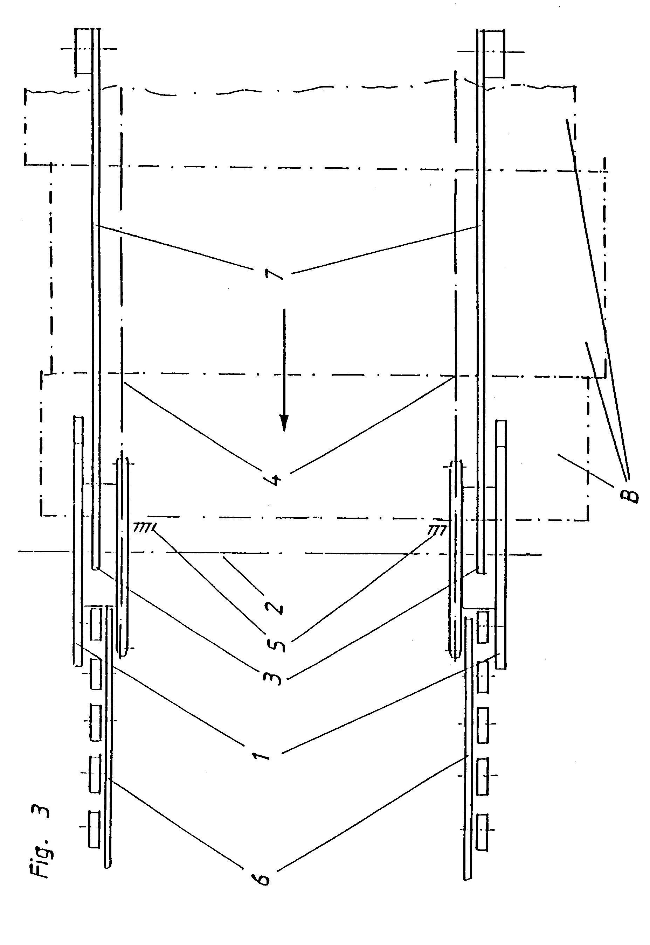

Figur 3 zeigt die Draufsicht vorbeschriebener Vorrichtung.

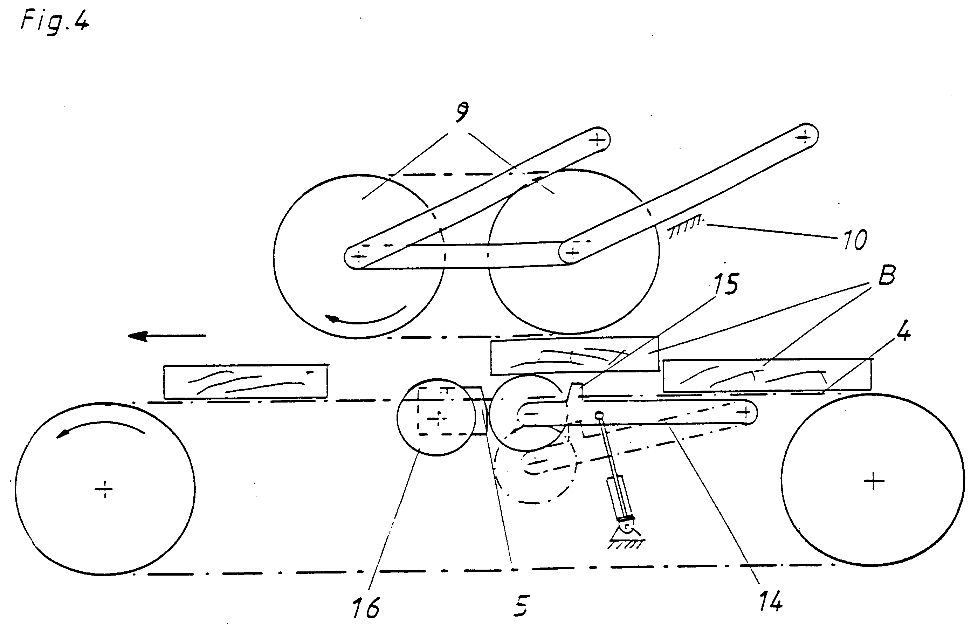

Figur 4: Anstelle der Zuteilscheibe kann gemäß einer anderen Ausführungsform der Erfindung eine Hebevorrichtung (14) mit oder ohne Rolle verwendet werden. Die Rolle kann lose oder angetrieben sein, oder der Antrieb kann über die Oberdruckeinrichtung erfolgen. Die Abbildung zeigt die Rückhaltung der nachfolgenden Bretter über einen schwenkbaren Anschlag (15) mit Antrieb durch die Gegendruckeinrichtung. Die Betätigung der Hebevorrichtung kann auch durch eine Kurvenscheibe, wie in den Figuren 1 und 2 dargestellt, erfolgen. Der schwenkbare Anschlag (15) kann mit der Hebevorrichtung (14) verbunden sein oder separat betätigt werden.

### Rückhaltevorrichtung: (Figur 1, 2, 3, 4, 6, 7, 8)

Um ein sofortiges Nachrücken der folgenden Bretter, was insbesondere bei schmalen Brettern zu Störungen führen kann, zu vermeiden, ist eine Rückhaltevorrichtung vorgesehen.

Dazu dient die Bremsleiste (7), die durch die Kurvenscheibe (3) angehoben wird und die auf dem Förderer (4) ankommenden Bretter abhebt und dadurch stoppt. Die Kurvenscheibe (3) kann direkt mit der Zuteilscheibe (1) bzw. der Welle (2) gekoppelt oder separat angetrieben sein.

Anstelle der vorbeschriebenen Bremsleiste (7) kann auch ein außerhalb des Eingriffsbereiches (E) wirkender beweglicher Anschlag (15) eingesetzt werden, der durch Gewicht-oder Federkraft über die Auflage des Förderers (4) angehoben, jedoch durch die daraufliegenden Bretter unter die Auflagekante gedrückt wird und mit seiner oberen Kante jeweils an der Brettunterseite anliegt. Beim Anheben des am Anschlag (5) anliegenden Brettes durch die Zuteilscheibe (1) folgt der Anschlag (15), bedingt durch die nach oben wirkende Federkraft, der Unterkante des zugeteilten Brettes, erreicht nach Passieren dieses Brettes seine obere Position und stoppt die nachfolgenden Bretter. Hat das Zuteilsegment den Eingriffsbereich verlassen, wird der Anschlag (15) durch eine geeignete Steuerung (wie vorbeschrieben) kurz in seine untere Position gebracht und die nachrückenden Bretter gelangen zum Anschlag (5).

Wird anstelle der Zuteilscheibe eine Hubeinrichtung (14) zum Anheben der Bretter über den Anschlag (5) eingesetzt, können Hubeinrichtung (14) und der schwenkbare Anschlag (15) eine Einheit bilden (Figur 4). Auch hier kann die Betätigung nach unten über eine Kurvenscheibe oder dergl . bzw. separat (bei unregelmäßiger Taktfolge) erfolgen.

Üblicherweise sind mehrere vorbeschriebene Aggregate fluchtend in Reihe angeordnet.

Die Fördereinrichtungen (4) und (6) sind wahlweise in angetriebener Ausführung (Kettenförderer) oder ohne Antrieb als Rollbahnen mit Gefälle möglich. Auch kann anstelle des Förderers (6) auf eine feste Ablage abgelegt werden.

### Oberdruckeinrichtung:

Um insbesondere bei schneller Taktfolge den Kraftschluß zwischen Zuteilscheibe und Brett zu erhöhen, kann oberhalb des Eingriffsbereiches (E) , eine nach oben bewegliche oder feste Oberdruckeinrichtung (8) oder (9) angebracht werden.

Durch einen einstellbaren Höhenanschlag (10) wird der Abstand zur Fördereinrichtung (4) größer als die Brettdicke eingestellt, so daß ankommende Bretter ohne Widerstand zum Anschlag (5) gelangen. Beim Eingriff der Zuteilscheibe bzw. der Hubeinrichtung wird zunächst das Brett angehoben und durch die weitere Aufwärtsbewegung zwischen Oberdruckeinrichtung und Hebevorrichtung gepreßt, was den Kraftschluß zwischen Brett und Hebevorrichtung erhöht. Anstelle einer Gegendruckrolle (Figur 1) kann auch eine Oberdruckeinrichtung (9) mit mehreren Rollen, die auch als Ketten-oder Riementrieb (Fig. 2, 4, 7) mit oder ohne Antrieb oder auch als Gleitkufe ausgebildet sein kann, verwendet werden, die das Brett über den gesamten Eingriffsbereich belastet.

Zur Vermeidung von Störungen durch einseitiges Anliegen der Bretter am Anschlag (5) kann der Zuteiler durch eine geeignete Schaltung (optoelektronische Überwachung oder dergl. ) gestoppt werden, falls das erste Brett nicht an den seiner Gesamtlänge zugeordneten Anschlägen (5) anliegt.

### Anwendung bei anschließendem Quertranport: (Figuren 1 bis 7 )

Bei Weitertransport in gleicher Richtung (quer zu Längsachse) z. B. bei Durchlauf-Kappsägen können Zuteil-und Kurvenscheibe direkt mit der nachgeschalteten Fördereinrichtung (Umlenk-Kettenrad der Durchlauf-Kappsäge) gekoppelt werden, sodaß ein separater Antrieb des Zuteilers entfällt.

Diese Anwendung setzt einen gleichen Mitnehmerabstand der Transportkette der Ablängsäge voraus; ist dies nicht der Fall, kann ein separat getakteter Antrieb eingesetzt werden.

Bei der Ablage der Bretter auf einen Tisch, wobei eine exakte Positionierung gefordert wird, kann die Zuteilscheibe bzw. Hubvorrichtung mit einer Ausrichtvorrichtung gekoppelt werden (Figur 5). Diese Vorrichtung hat zusätzlich einen Ausrichthebel (17), der durch eine an der Zuteilscheibe angebrache Kurvenscheibe (18) das Brett nach Ablegen durch das Segment (d2) eine kleine Strecke sanft weiterschiebt und dadurch zu seiner Längsachse ausrichtet. Die Bremsleiste (7) ist in Figur 5 nicht dargestellt. Zur Betätigung des Ausrichthebels sind auch andere Vorrichtungen wie Linearantrieb möglich.

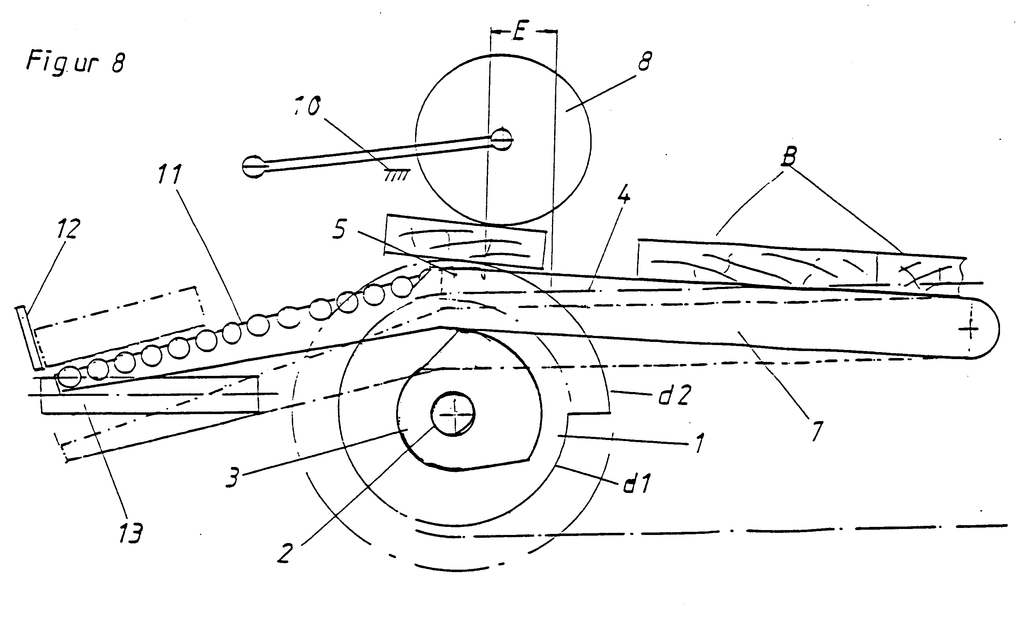

### Anwendung bei anschließendem Längstransport: (Figur 8)

Werden die zugeteilten Bretter auf eine Längsfördereinrichtung (13) abgelegt, kann die Bremsleiste über die Kurvenscheibe hinaus als Förderer (11) verwendet werden, über welchen die zugeteilten Bretter bis zum Anschlag (12) der Längsfördereinrichtung abrollen und dadurch gleichzeitig zu ihrer Längsachse ausgerichtet werden. Durch entsprechende Form der Kurvenscheibe (3) wird die Bremsleiste so lange in der oberen Stellung gehalten, bis das Brett am Längsanschlag (12) ankommt. Auch hier ist ein separater Antrieb möglich, der als Linearantrieb mittels Zylinder oder dergl. erfolgen kann.

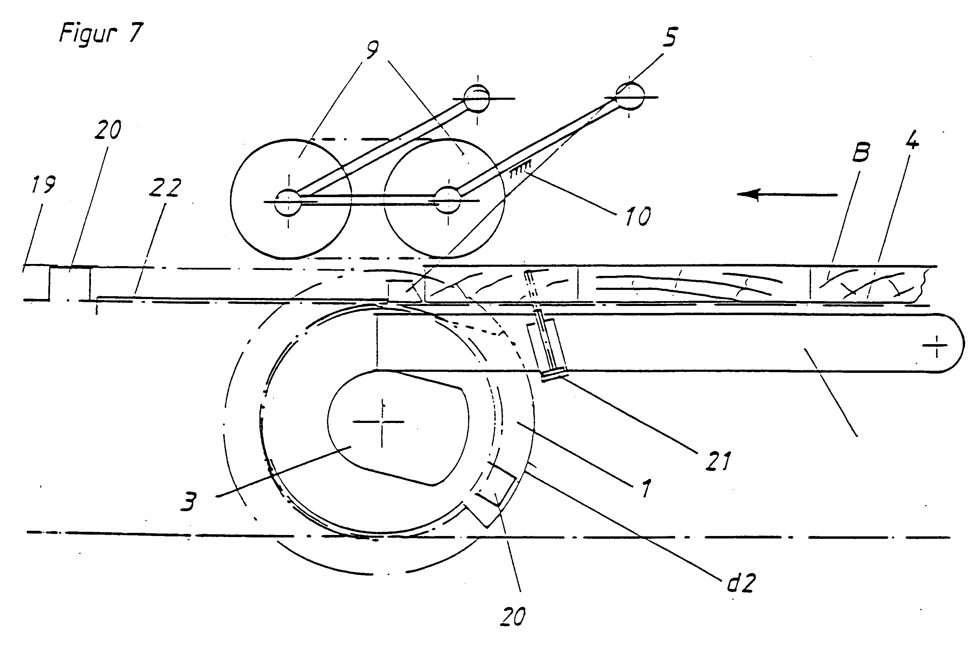

Figur 7 zeigt die Zuteilvorrichtung in direkter Koppelung mit einer Durchlauf-Kappsäge, wobei Zuteilscheibe (1) mit Kurvenscheibe (3) sowie das Antriebs-Kettenrad des Förderers (4) mit dem Umlenk-Kettenrad der Durchlauf-Kappsäge gekoppelt sind. Hier erfordern Zuteilscheibe (1), Kurvenscheibe (3) und Förderer (4) keinen eigenen Antrieb. Die auf der Transportkette (19) der Durchlauf-Kappsäge befestigten Mitnehmer (20) sind so angeordnet, daß diese dem Zuteilsegment (d2) etwas voreilen. Es kann auch die Umfangslinie der Mitnehmer (20) kleiner gewählt werden, sodaß die Umfangslinie den Eingriffsbereich nicht berührt.

Diese direkte Koppelung setzt zur störungsfreien Funktion das Anliegen des zuzuteilenden Brettes an der seiner Gesamtlänge entsprechenden Anzahl der Anschläge (5) voraus. Ist dies nicht der Fall, wird die Fördereinrichtung kurz in die entgegengesetzte Richtung gesteuert, der Anschlag (21) schwenkt nach oben, die Bretter werden wieder in Normalrichtung transportiert, bis das erste Brett an den seiner Gesamtlänge zugeordneten Anschlägen (21) anliegt. Nachdem das Zuteilsegment (d2) den Eingriffsbereich passiert hat, senken sich die Anschläge (21) ab, die Bretter werden zu den Anschlägen (5) transportiert und dort erneut gestoppt.

Da der Antrieb des Förderers (4) von der Transportkette der Durchlauf-Kappsäge erfolgt, ist dieses Vorgehen auch beim erstmaligen Befüllen des Förderers (4), bei jeder Unterbrechung des Materialflusses oder bei Schrägliegen eines Brettes auf dem Förderer (4) nötig.

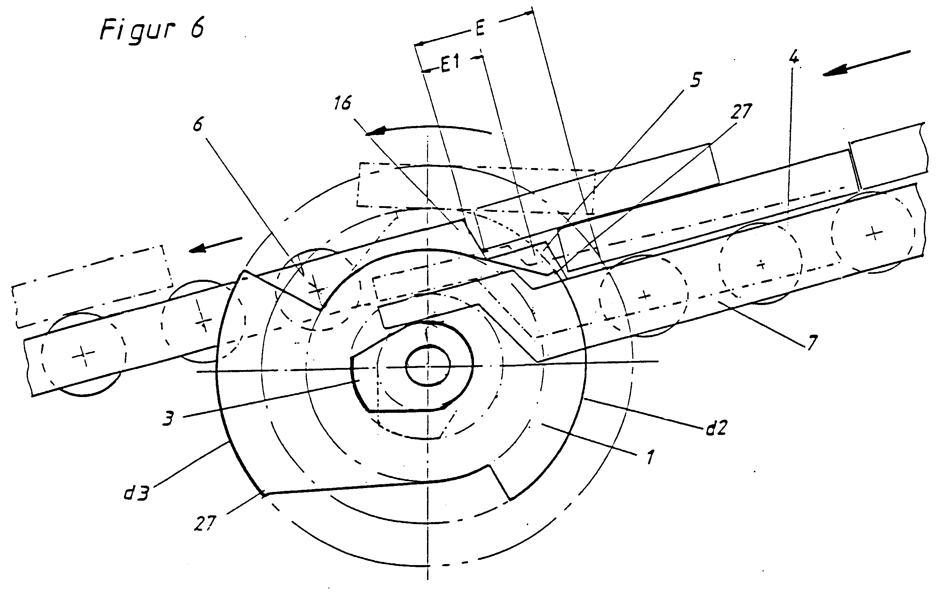

Figur 6 zeigt die Ausführung einer zweistufigen Zuteilscheibe mit zweistufigem Anschlag (5) und (16), die sich insbesondere zum Einsatz bei Entstapelgeräten (Kippbühnen) eignet. Da bei Entstapelgeräten die Bretter auch aufeinanderliegend ankommen können, wird das untere Brett durch den Anschlag (5) gestoppt, und das obenliegende Brett gleitet über das am Anschlag (5) anliegende untere Brett hinweg und wird vom Anschlag (16) gestoppt. Durch die unterschiedlichen Durchmesser (d2) und (d3) der Zuteilsegmente ergeben sich zwei Eingriffsbereiche (E) und (E1). Falls an beiden Anschlägen (5) und (16) Bretter anliegen, wird zunächst das obere Brett durch das Zuteilsegment (d2) und danach das am Anschlag (5) liegende untere Brett durch das Zuteilsegment (d3) zugeteilt. Die Bremsleiste (7) bzw. der Anschlag (15) wird nur beim Eingriff des Zuteilsegmentes (d3) angehoben.

## Patentansprüche

1. Vorrichtung zur Vereinzelung und Zuteilung von Werkstücken, insbesondere von Holzwerkstücken, die mindestens eine Fördereinrichtung (4), mindestens einen Anschlag (5), der die geförderten Werkstücke anhält, und mindestens eine unterhalb der Fördereinrichtung angeordnete Hebevorrichtung, welche a) als segmentierte Zuteilscheibe (1) oder b) als angetriebene Hubrolle (14) ausgebildet ist und das erste Werkstück über den Anschlag (5) hinausheben kann, aufweist, **dadurch gekennzeichnet, daß** die Umfangsoberfläche des/der Segmente /-s der Zuteilscheibe bzw. der Hubrolle griffig ausgebildet sind und außerdem die Vorrichtung eine Rückhaltevorrichtung aufweist, welche die dem angehobenen Werkstück nachfolgenden Werkstücke anhebt und dadurch zurückhält und erst wieder freigibt, nachdem das voranlaufende Werkstück über den Anschlag (5) hinweggehoben und weitertransportiert worden ist, so daß die Werkstücke nicht nur über den Anschlag (5) hinweggehoben, sondern auch mit kontrollierter Geschwindigkeit weitertransportiert werden.

2. Vorrichtung nach Anspruch 1, **dadurch gekennzeichnet, daß** die Rückhaltevorrichtung eine Bremsleiste (7) ist, die, während die Hebevorrichtung sich im Eingriffsbereich befindet, über die Auflagekante der Fördereinrichtung (4) hinausgehoben wird.

3. Vorrichtung nach Anspruch 1, **dadurch gekennzeichnet, daß** die Rückhaltevorrichtung ein schwenkbarer Anschlag (15) ist, der beim Hochheben des ersten Werkstücks der Werkstückunterseite folgt, nach Passieren des ersten Werkstücks seine obere Position erreicht und die nachfolgenden Werkstücke stoppt und, nachdem die Hebevorrichtung den Eingriffsbereich verlassen hat, in die untere Position zurückkehrt.

4. Vorrichtung nach einem der Ansprüche 1 bis 3, **dadurch gekennzeichnet, daß** sie eine Gegendruckeinrichtung zum Festhalten des hochgehobenen Werkstücks auf der Hebevorrichtung aufweist.

5. Vorrichtung nach Anspruch 4, **dadurch gekennzeichnet, daß** die Gegendruckeinrichtung oberhalb der Hebevorrichtung und über der Fördereinrichtung (4) angeordnet und nach oben und unten beweglich ist, wobei ihr Abstand zur Fördereinrichtung (4) so einstellbar ist, daß das auf der Fördereinrichtung ankommende Werkstück ungehindert bis zum Anschlag (5) gelangt und dann beim Angehobenwerden zwischen Hebevorrichtung und Gegendruckeinrichtung zur Erhöhung des Kraftschlusses eingeklemmt wird.

6. Vorrichtung nach Anspruch 4 oder 5, **dadurch gekennzeichnet, daß** die Gegendruckeinrichtung eine oder mehrere Rollen umfaßt, die durch Riemen oder Ketten verbunden sein können und gegebenenfalls angetrieben sind.

7. Vorrichtung nach einem der Ansprüche 1 bis 6, **dadurch gekennzeichnet, daß** der/die Anschlag/Anschläge verstellbar ist/sind.

## Claims

1. An apparatus for singularizing and allocating work pieces, in particular of wooden work pieces, which is provided with at least one conveying device (4), at least one stop (5) which stops the conveyed work pieces, and at least one lifting apparatus, which is arranged below the conveying device, and is elaborated a) as a segmented batching disk (1) or b) as a driven lifting roll (14), and can lift the first work piece over the stop (5), **characterized in that** the circumferential surface of the segment (s) of the batching disk or of the lifting roll are elaborated with a favourable grip and in that, besides, the apparatus for singularizing and allocating work pieces is provided with a retaining apparatus which lifts the work pieces following the lifted work piece and will, thereby, retain them, and will only release the same once the preceding work piece has been lifted over the stop (5) and has been conveyed further so that the work pieces are not only lifted over the stop (5), but are also conveyed further at controlled speed.

2. An apparatus as claimed in claim 1, **characterized in that** the retaining apparatus is a braking strip (7) which, while the lifting apparatus is located in the engagement zone, is lifted over the bearing edge of the conveying device (4).

3. An apparatus as claimed in claim 1, **characterized in that** the retaining apparatus is a swivellable stop (15) which follows the lower side of the work piece during the lifting of the work piece, reaches its upper position after passing the work piece and stops the following work pieces and, once the lifting apparatus has left the engagement area, returns to the lower position.

4. An apparatus as claimed in one of the claims 1 to 3, **characterized in that** it is provided with a counterpressure device for holding tight the lifted work piece on the lifting apparatus.

5. An apparatus as claimed in claim 4, **characterized in that** the counterpressure device is arranged above the lifting apparatus and above the conveying device (4) and is movable upwardly and downwardly, with its distance to the conveying device (4) being adjustable in such a way that the work piece arriving on the conveying device reaches the stop (5) unchecked and, while being lifted, is then clamped between the lifting apparatus and the counterpressure device in order to increase the frictional connection.

6. An apparatus as claimed in claim 4 or 5, **characterized in that** the counterpressure device comprises one or several rollers which can be connected by belts or chains and are optionally driven.

7. An apparatus as claimed in one of the claims 1 to 6, **characterized in that** the stop (s) is/are adjustable.

## Revendications

1. Dispositif pour individualiser et avancer des pièces, en particulier des pièces en bois, présentant au moins un transportateur (4), au moins une butée (5) qui arrête les pièces convoyées, et au moins un dispositif de levage situé en dessous du transportateur, lequel a) est réalisé sous forme de disque d'avancement segmenté (1) ou b) est réalisé sous forme de galet de levage entrainé (14) et lequel peut soulever la première pièce par-dessus la butée (5), **caractérisé en ce que** la face périphérique du/des segment (s) du disque d'avancement ou du galet de levage sont configurées de façon à permettre un accrochage et que le dispositif pour individualiser et avancer des pièces présente, en outre, un dispositif de retenue qui soulève les pièces qui suivent la pièce soulevée et, par conséquent, les retient et qui ne les relâche qu' après que la pièce précédente a été soulevée par-dessus la butée (5) at a poursuivi sa progression, en sorte que les piéces soient non seulement soulevées au-delà de la butée (5), mais aussi pour qu'elles soient transportées plus loin à vitesse controlée.

2. Dispositif selon la revendication 1, **caractérisé en ce que** le dispositif de retenue est une Patte de freinage (7) qui est soulevée par-dessus le bord d'appui du transportateur (4) lorsque le dispositif de levage se trouve dans la zone d'intervention.

3. Dispositif selon la revendication 1, **caractérisé en ce que** le dispositif de retenue est une butée escamotable (15) qui, lorsque la pièce est soulevée, suit la face inférieure de la pièce, atteint sa position supérieure après passage de la première pièce, et arrête les pièces suivantes, et qui rejoint sa position inférieure lorsque le dispositif de levage a quitté la zone d'intervention.

4. Dispositif selon l'une des revendications 1 à 3, **caractérisé en ce qu'**il présente un dispositif de contre-pression destiné à maintenir la pièce soulevée sur le dispositif de levage.

5. Dispositif selon la revendication 4, **caractérisé en ce que** le dispositif de contrepression est disposé au-dessus du dispositif de levage et au-dessus du transportateur (4) et est mobile en haut et en bas, sa distance par rapport au transportateur (4) pouvant être régulée en sorte que la pièce arrivant sur le transportateur parvienne sans frein jusqu' à la butée (5) et qu'elle soit alors serrée, tout en être soulevée, entre le dispositif de levage et le dispositif de contre-pression afin d'augmenter l'adhérence.

6. Dispositif selon la revendication 4 ou 5, **caractérisé en ce que** le dispositif de contre-pression comprend un ou plusieurs galets qui peuvent être raccordés par des courroies ou des chaines et qui sont éventuellement entrainés.

7. Dispositif selon l'une des revendication 1 à 6, **caractérisé en ce que** la/les butée (s) est/sont réglables.
